# EUROPEAN PATENT SPECIFICATION

(11) **EP 1 909 560 B1**
(45) Date of publication and mention of the grant of the patent: **24.12.2008**
(21) Application number: 06762156.5
(22) Date of filing: 23.06.2006
(51) Int. Cl.: A01K 11/00

(54) **EAR TAG FOR IDENTIFYING ANIMALS**
OHRMARKE ZUR IDENTIFIZIERUNG VON TIEREN
ÉTIQUETTE D'OREILLE PERMETTANT D'IDENTIFIER DES ANIMAUX

(30) Priority: 22.07.2005 ES 200501802
(43) Date of publication of application: 16.04.2008
(73) Proprietor: Rumitag, S.L., 08950 Esplugues de Llobregat (ES)
(72) Inventor: VILASECA VINTRO, Joan, Francesc, E-08950 Esplugues de Llobregat (ES)
(74) Representative: SUGRANES - VERDONCES - FERREGÜELA
(86) International application number: PCT/EP2006/006058
(87) International publication number: WO 2007/009553

(56) References cited:
- WO-A-91/10982
- WO-A-95/04455
- NL-A- 9 200 027
- US-A1- 2003 121 188
- US-B1- 6 666 170

## Description

### Technical field of the invention

The invention relates to an ear tag for identifying animals and includes a male component, equipped with a stem topped with a head, and a female component that is comprised of an identification plate joined to a receptacle and retaining means. The receptacle is adapted to receive and accommodate therein the head of the male component and the retaining means are designed to avoid its removal from the interior receptacle, the male component remaining joined to the female component once the head has been inserted into the receptacle.

### Background of the invention

Conventional ear tags include a male component that is comprised of a stem topped with a sharp-pointed head and a female component that is comprised of an fastening socket, equipped with a central opening that permits the head to pass through in one direction but prevents passage in the opposite direction, keeping both male and female components firmly joined.

In a general sense, the male component and/or the female component are joined to an identification plate made from soft plastic, which serves as support for the direct entry of the data related to the animal, or for the adhesion of a printed laminated support.

This type of tag is fitted to the ear of the animals with the help of tools, such as pliers, pressing the head by its stem through the ear of the animal and then through the female component's fastening socket. In this way, both male and female components are joined to each other and to the animal's ear.

Known fastening sockets are comprised of retaining means comprised of a plurality of semi-elastic projections or tabs that are extended, at a slight angle to the longitudinal axis of the socket, toward the interior of the fastening socket. The inclination of the retaining means' projections provide the fastening socket with a decreasing cross sectional area and so that the passage cross-section is slightly less than the width of the male component's head. When the latter is passed through the fastening socket, the point of the head presses and bends the tabs, inclined in the direction of insertion of the head, and forces withdrawal increasing the socket's passage cross-section and allowing the head to pass through. Once it has passed completely to the other side of the socket, the tabs tend to recover their original position so that its ends are supported and fastened against the base of the head. The movement of the head in the opposite direction to that of its insertion in the socket causes, by pressure, the tabs to bend in the opposite direction, with the socket's passage cross-section decreasing as the pressure exerted on the tabs increases.

The free end of the tabs determines the socket's passage cross-section, and the length and inclination of the tabs determines their tendency to be bent by the head's point to be retained. In general, the sockets used satisfactorily retain the male components' heads but the design of some flanges does not permit an inseparable joint between the male and female components of the ear tag. On many occasions, the pressure that is applied by the head on the tabs when it tries to separate both components causes the tabs to break, freeing or separating the male component from the female, so that the first could be reused.

Furthermore, this solution based on elastically deformable tabs entails that the free end of the tabs, once the head has crossed the retaining socket, is supported against the head's support stem, the tabs exerting real pressure on said stem, making it slightly difficult for the stem to turn freely with respect to the socket when the two components, male and female, are coupled. In the same manner, the existing fit between the tabs' ends and the stem can complicate the extraction of external components that could reach this area of the tag, and that can become hooked when they are pinched between the stem and the tabs. This is the case, for example, with shrub branches, cabling, and similar things. When the animal tries to free itself from these hooked components, it can hurt its ear and by ripping the ear, may even lose the tag.

On the other hand, in order to avoid fraud and reuse of the tags, there are ear tags where the female component is equipped with a casing, configured by way of a receptacle, adapted for retaining the male component's head once it has crossed the fastening socket. The casing is made of a more rigid material than that of the retaining means and it takes the form of a cap, which is open at one end, by which it receives the male component, and closed at the other end. This casing prevents the head from being pushed, from outside the tag, in the opposite direction to that of its insertion into the casing. The rigidity of the casing presents the head housed therein from being directly or indirectly tampered with.

European patent EP 1037525 discloses an ear tag that includes a male component and a female component that have all the abovementioned components. The female component of the tag comprises a casing that includes an opening with a retaining means for when the head of the stem is inserted into the casing. The casing and the retaining means can consist of a single piece or two separate pieces, which can be coupled and are attached by moulding to an identification plate by means of a flange on the retaining means. This retaining means has, in a conventional manner, a plurality of inclined tabs that extend inwards from the exterior of the casing, and the distal ends of the tabs are designed to retain the head when it is inserted into the casing.

Another ear tag disclosing the above mentioned components is known from document US-B-6, 666, 170.

One of the objectives of the present invention is to provide known ear tags with an alternative solution for the coupling of the male component with the female component, and for the retention of the head inside the casing on said female component. The alternative solution must ensure that the coupling of the male and female components is an inseparable coupling, which overcomes the drawbacks related with the use of deformable tabs.

One particular objective of the present invention is that when attempting to remove the head from the casing by pulling the male component in the direction of removal of said head, this should cause the stem of the head to break, so that the ear tag would be rendered unusable as the male component would be broken and the head would remain permanently lodged in the casing of the female component.

### Explanation of the invention

The ear tag that is the object of the invention, which overcomes the aforementioned drawbacks, is of the type that includes two separate components that are adapted to be irreversibly coupled together, consisting of a male component, with a headed stem preceded by a peripheral step, and a female component that comprises a receptacle, the cavity of which is adapted to house the head of the male component, and a retaining means to secure the head inside the receptacle and therefore secure the female component, both being embedded in the body of an identification plate.

Essentially, the tag is characterised in that the receptacle of the female component has an opening in the rim, solidly joined to which is the retaining means, which comprises at least two retaining clips that are elastically deformable on the plane of the opening and transversally cross the rim, between them defining a passage for the head of the male component, which can widen as the head of the male component is inserted into the female component due to the bending of the clips towards the interior walls of the receptacle and which narrow once said head is fully inserted, as the clips recover their original form, the head thus being irreversibly retained inside the female component as the step is stopped by the clips.

According to another characteristic of the invention, in the area disposed inside the receptacle, the retaining clips each comprise central portions with a quadrangular cross-section, the middle longitudinal planes of which extend essentially parallel to the direction of insertion of the head of the male component into the female component.

According to another characteristic of the invention, said central portions have a rectangular cross-section, their magnitude in the direction of insertion of the head of the male component into the female component being greater than their magnitude in the perpendicular direction.

According to one variant of the invention, there are two retaining clips, which are parallel and are joined together by at least one of their ends by a connecting portion, thereby forming part of an essentially U-shaped retaining body.

According to a characteristic of this variant, the retaining clips are inserted into respective notches provided for this purpose in the edge of the rim of the receptacle, fitting tightly therein, and the clips have respective retaining portions on at least one of their ends, which are supported against the exterior wall of the receptacle, thus preventing the retaining body from moving on the plane of the opening in a direction transversal to the clips as they are limited by said notches and in a direction longitudinal to the clips as the retaining portions are limited by the exterior wall of the receptacle.

According to another characteristic, the connecting portion between the clips has an interior profile that is complementary to the exterior wall of the receptacle and said connecting portion between the clips rests on the exterior wall of said receptacle, said connecting portion acting as a retaining portion in the longitudinal direction on the plane of the opening.

Typically, the retaining portions take the form of a hook.

According to another characteristic of said variant, the retaining clips each have tabs disposed on the clips, which extend outwards transversally, having an exterior profile that is complementary to the interior wall of the receptacle, and which fit tightly into said interior wall of the receptacle partially closing off its opening.

In a preferred mode, the receptacle has an annular interior seat upon which the tabs rest.

According to another variant of the invention, there are three retaining clips, which between them determine an aperture for the head of the male component with a triangular cross-section.

According to another characteristic of said variant, the three retaining clips are joined together with the joint between each two clips constituting one of the vertices of the aperture of a retaining body.

In one variant of the invention, the retaining body has transversal extensions that rest in the rim of the opening of the receptacle and a retaining ring fixed onto the retaining clips, which is inserted into the receptacle, fitting tightly therein.

In another variant of the invention, the three retaining clips form a triangular portion of the retaining body, which is inserted into the opening of the receptacle, fitting tightly therein, and the vertices of said triangular portion are slightly bevelled to correspond with the interior profile of the interior wall of the receptacle, against which they rest.

According to another characteristic of the tag according to the invention, the receptacle has an exterior flange that has a slot in one of its faces for housing an electronic identification device, whilst its other face has an annular wall concentric with the aperture, which will serve to support the coiled aerial of the electronic identification device on its outer surface.

### Brief description of the drawings

In the attached drawings several forms of embodiment of the ear tag according to the invention are illustrated by means of a non-limiting example. In said drawings:
Fig. 1 is a side view of a tag according to the invention, which includes a separate male component and female component, wherein the female component is partially cross-sectioned;
Fig. 2 is a perspective view of the receptacle and the retaining means of the female component, in a correlative engaging position, according to one variant of the tag that is the object of the invention;
Figs. 3 and 4 are both views of the underside of the receptacle and the retaining means, in a mutual coupling position, according to two variants of the tag according to the invention;
Fig. 5 is a perspective view of the receptacle and the retaining means of the female component, in a correlative position of engaging, according to another variant of the tag that is the object of the invention;
Fig. 6 is a perspective view of the retaining means of the female component according to another different variant of the tag that is the object of the invention;
Fig. 7 is a perspective view of a variant of interest of a receptacle for a tag according to the invention;
Fig. 8 is a partially cross-sectioned side view of the receptacle shown in Fig. 6 which supports an electronic identification device and an aerial for said device; and
Figs. 9, 10 and 11 are front views of the female components corresponding to an ear tag according to the invention and an ear tag according to the current state of the art, respectively.

### Detailed description of the drawings

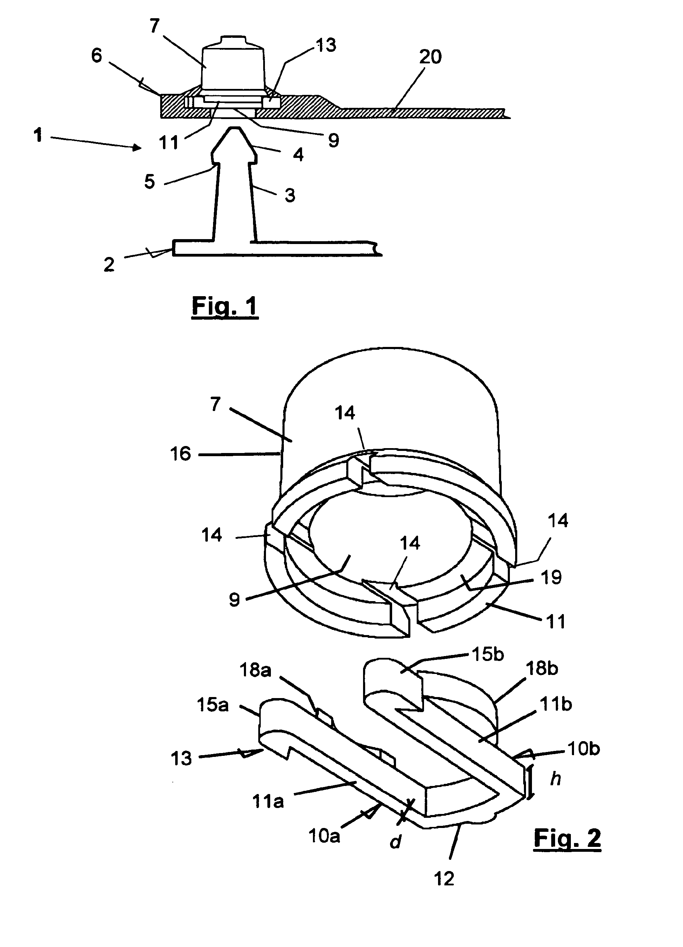

In Figs. 1 to 9 described above, the same numerical references have been used to designate equivalent components in the different variants shown.

Fig. 1 shows an ear tag 1 according to the invention. The tag in question includes a male component 2 and a female component 6 that are adapted to be joined together, as will be explained in detail below.

The male component 2 has a stem 3 topped with a head 4 on its free end, preceded by a peripheral step 5, whilst the female component comprises a receptacle 7 provided with an opening 9 and a retaining means, consisting of a retaining body 13 installed on the rim 11 of said opening 9, the receptacle 7 and the retaining means being solidly joined as they are embedded in the body of the identification plate 20, which is made from a plastic material, moulded around the assembly formed by the receptacle 7 and the retaining body 13.

The body of the identification plate 20 can partially surround the receptacle 7, which is closed from above, partially surrounding it and leaving its upper portion uncovered, as is shown in Fig. 1, or otherwise the body 20 can completely cover the receptacle 7, except for its opening 9, it should be understood, which must remain free for the access of the head 4 of the male component 2.

For the coupling of the male 2 and female 6 components, it is only necessary to fully insert the head 4 of the male component 2 into the receptacle 7 through its opening 9 and through the retaining body 13, which is adapted so as to prevent the head 4, once inserted, from being removed from the receptacle 7.

Fig. 2 shows the receptacle 7 and the retaining means, consisting of a retaining body 13, according to a first variant of the ear tag of the invention. The receptacle 7 and the retaining body 13 are adapted to couple with one another and, specifically, so that the retaining body 13 engages with the rim 11 of the opening 9 of the receptacle 7, being inseparably joined thereto with the rear moulding of the identification plate 20 (not shown in Fig. 2).

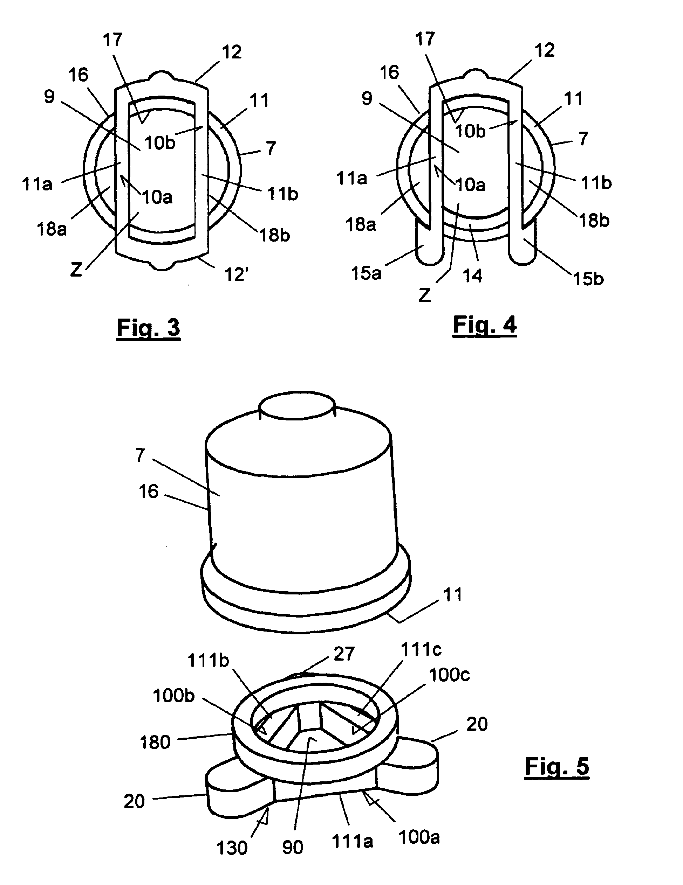

The retaining body 13 comprises at least two retaining clips 10a and 10b, which are parallel to one another and joined by one of their ends by a connecting portion 12, transversally crossing said opening 9 when the retaining body 13 engages with the rim 11 of the opening 9 of the receptacle 7, (see Figs. 3 and 4). The clips 10a and 10b are elastically deformable on the plane of said opening 9 and between them define an aperture Z (see Figs. 3, 4 and 9) for the head 4 (not shown), which widens when the head 4 is inserted into the receptacle 7, due to the bending of said clips 10a and 10b, and narrows once said head 4 has been fully inserted into the receptacle 7 and the clips 10a and 10b recover their original form, the head 4 remaining irreversibly retained inside the female component as the step 5 is limited by said clips 10a and 10b.

In the area disposed inside the receptacle 7, the retaining clips 10a and 10b each comprise central portions 11 a and 11 b with a quadrangular cross-section, the middle longitudinal planes of which essentially extend parallel to the direction of insertion of the head 4 (not shown). This arrangement gives the clips 10a and 10b an extraordinary resistance to retain the head inside the receptacle 7, as it increases the capacity of resistance to the clips 10a and 10b bending when they are subjected to stress in the direction of removal of the head 4 from the receptacle 7.

Unlike the known tags, wherein the retaining means consists of tabs orientated in the direction of insertion of the head into the receptacle 7, the clips 10a, 10b of the tag according to the invention elastically deform on the plane of the opening 9 of the receptacle 7.

In the known embodiments, the tabs must have a minimal length if they are to be easily deformable when pushed by the head during its insertion into the receptacle 7, which conditions the size of the opening 9 of the receptacles used. This drawback is eliminated by the inclusion of the clips according to the invention, which, as they deform on the plane of the opening 9, can be of a very small width or magnitude *d* in the direction transversal to that of insertion of the head into the receptacle 7, as it is its height or magnitude *h* in the direction of insertion of the head into the receptacle 7 that gives the clips greater resistance against their deformation when an attempt is made to remove the head from the receptacle 7. In this way, it is also possible to reduce the total weight of the tag, thanks to reducing the weight of its components and particularly of the retaining body 13.

Preferably, and according to the explanation in the previous paragraph, said central portions 11 a and 11 b have a rectangular cross-section, their magnitude *h* in the direction of insertion of the head of the male component into the female component being greater than their magnitude d in the perpendicular direction.

As can be observed in Fig. 2, the receptacle 7 has four suitably distributed notches 14 in the edge of its opening 9 into which to slot the clips 10a and 10b of the retaining body 13, which in turn has respective retaining portions 15a and 15b at the free ends of the clips 10a and 10b in the form of hooks, which will rest against the exterior wall 16 of the receptacle 7 when the retaining body 13 is coupled to the receptacle 7. That is to say, when the clips 10a and 10b are inserted into the notches 14 in the edge of the opening 9 of the receptacle 7.

In the variant of Fig. 2, each retaining clip 10a and 10b also has a tab 18a and 18b, respectively, disposed on the clips, which extend transversally outwards, their exterior profile being that of a circumferential arc that is complementary to the interior wall 17 of the receptacle 7, so that when the retaining body 13 engages with the rim 11 of the receptacle 7, said tabs 18a and 18b fit tightly against said interior wall 16 of the receptacle 7, partially closing off its opening 9. It is thereby possible to prevent the insertion of plastic material into the receptacle 7 when the identification plate 20 is moulded thereto.

It is intended that the receptacle 7, as can be observed in Fig. 2, should have an annular interior seat 19 to accommodate the tabs 18a and 18b when the retaining body 13 engages with the rim 11 of the receptacle 7.

Figs. 3 and 4 show a front view of two arrangements formed by the receptacle 7 in Fig. 2 and by two retaining bodies 13 that vary somewhat from the variant in Fig. 2. Figs. 3 and 4 show the receptacles 7 and their corresponding retaining bodies 13 coupled, before being moulded to the identification plate 20 (not shown).

The retaining body 13 in Fig. 4 includes all the characteristics of the retaining body 13 in Fig. 2, with the addition of a connecting strip 26 between the clips 10a and 10b. This connecting strip 26 prevents the clips 10a and 10b from accidentally coming towards one another before they engage with the rim 11 of the opening 9 of the receptacle 7, aiding the automation of this coupling stage. The connecting strip 26, which is disposed inside the opening 9 of the receptacle 7, has a profile that is complementary to the interior wall 17 of the receptacle 7 and its rests against this interior wall 17 when the retaining body 13 engages with the rim 11 of the opening 9 of said receptacle.

As can be seen in Fig. 4, the retaining body 13, once coupled to the receptacle 7, is prevented from moving on the plane of the opening 9 in a direction transversal to the clips 10a and 10b, as they are limited by the notches 14, and in a direction longitudinal to the clips 10a and 10b, as the retaining portions 15a and 15b and the connecting portion 12 are limited by the exterior wall 16 of the receptacle 7, thereby ensuring the correct moulding of the whole assembly to the identification plate 20.

In the variant shown in Fig. 3, the retaining clips 10a and 10b are joined by their two ends by the respective connecting portions 12 and 12', the connecting body having an essentially rectangular ring shape. In this variant, the clips 10a and 10b are also inserted into the notches 14 in the rim 11 of the opening 9 of the receptacle 7, whereby the retaining body 13 is prevented from moving on the plane of the opening 9 in a direction transversal to the clips 10a and 10b. The connecting portions 12 and 12', which rest against the exterior wall 17 of the receptacle 7, hold the retaining body 13 in place in the longitudinal direction.

The connecting portions 12 and 12' and the retaining portions 15a and 15b of the retaining bodies 13 aid the attachment of the assembly formed by the receptacle 7 and the retaining body 13 to the identification plate 20.

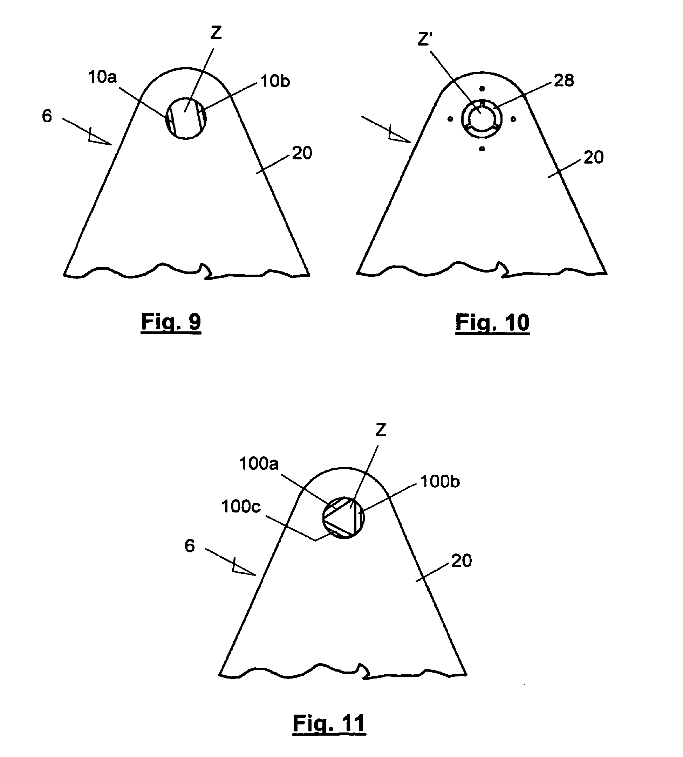

Fig. 9 shows the appearance of a female component 6 for a tag according to the invention, according to the variants in Figs. 2, 3 and 4. Said figure shows the aperture Z for the head 4 (not shown) defined by the clips 10a and 10b of the retaining body 13 embedded in the body of the identification plate 20. It can be seen that aperture Z is larger than aperture Z' defined by the tabs 28 on the female component 6 in Fig. 10, which corresponds to the female component 6 of a conventional tag. The greater width of aperture Z in the female component 6 of the tag according to the invention aids the free rotation of the stem 3 once the male component 2 and the female component 6 are coupled.

Fig. 5 shows another variant for a receptacle 7 and a retaining body 13 that can be coupled with one another, to be embedded in the body of an identification plate 20 (not shown) of a female component of a tag according to the invention.

Unlike the variants in Figs. 2, 3 and 4, there are three retaining clips 100a, 100b and 100c comprising the retaining body 130 and between them they define an aperture 90 for the head of the male component with a triangular cross-section.

As can be seen in said Fig. 5, the three retaining clips 100a, 100b and 100c are joined together, the joint between each of the two clips constituting one of the vertices of the aperture 90 of the retaining body 130, which has a set of transversal extensions 27 designed to rest on the rim 11 of the opening 9 of the receptacle 7 when the retaining body 130 engages with said receptacle. For said coupling, the retaining body has a retaining ring 180 fixed onto the retaining clips 100a, 100b and 100c, which is adapted to be inserted into the opening 9 of the receptacle 7, fitting tightly therein.

In a similar manner to the connecting portions 12 and 12' and the retaining portions 15a and 15b in Figs. 2, 3 and 4, the transversal extensions 27 of the retaining body 130 aid the attachment of the assembly formed by the receptacle 7 and said retaining body 130 to the identification plate 20.

In the variant shown in Fig. 5, in the area disposed inside the receptacle 7, each of the retaining clips 100a, 100b and 100c also comprises a central portion 111a, 111b and 111c with a quadrangular cross-section, the middle longitudinal plane of which essentially extends parallel to the direction of insertion of the head 4 (not shown) into the receptacle 7.

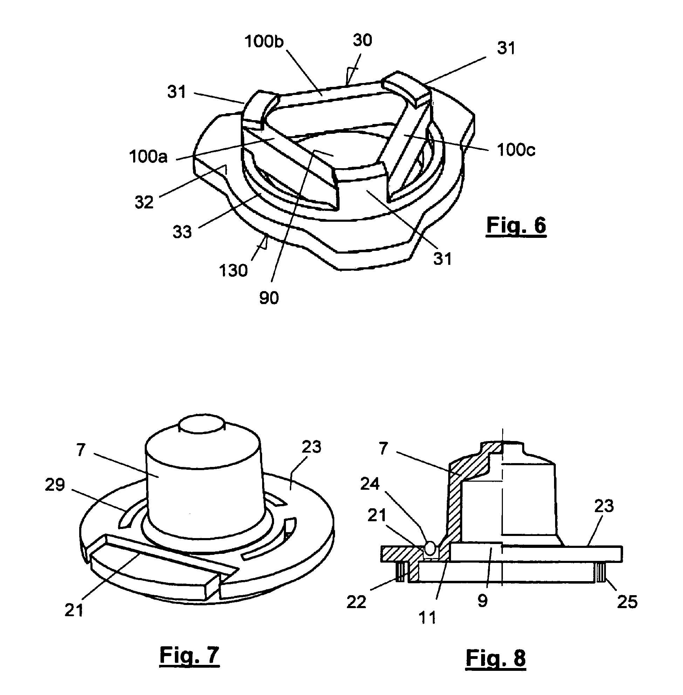

In the variant shown in Fig. 6, the retaining body 130 also comprises three retaining clips 100a, 100b and 100c, respectively, which between them define, as in the example in Fig. 5, an aperture 90 for the head of the male component with a triangular cross-section.

The three retaining clips 100a, 100b and 100c are joined together and define a triangular portion 30 of the retaining body 130 which is designed to be inserted into the aperture 9 of the receptacle 7, fitting tightly therein. For this purpose, the outer edges of the vertices 31 of said triangular portion 30 are slightly bevelled or chamfered, so that they will rest against the inner wall 17 of the receptacle 7 when the triangular portion 30 is inserted into the opening 9 of the receptacle 7; that is, when the retaining body 130 engages with the rim 11 of the opening 9 of the receptacle 7. As can be seen in Fig. 6, the retaining body 130 has an essentially flat exterior flange 32, by which the retaining body 130 rests against the edge of the rim 11 of the opening 9 of the receptacle 7 when coupled to the receptacle 7. As with the transversal extensions 27 of the retaining body 130 in Fig. 5, this exterior flange 32 aids the attachment of the assembly formed by the receptacle 7 and the retaining body 130 to the identification plate 20 when they are moulded thereto.

The exterior flange 32 of the retaining body 130 shown by way of an example in Fig. 6, also has a hollow central cylindrical portion 33 that extends perpendicularly to said exterior flange 32 and which links said exterior flange 32 with the triangular portion 30, which is centrally disposed on said hollow central cylindrical portion 33. In fact, as can be seen from said Fig. 6, the bevelled vertices 31 of the triangular portion 30 are continuously joined to the exterior wall of the central cylindrical portion 33. When coupled, the central cylindrical portion 33 of the retaining body 130 is also inserted into the opening 6 of the receptacle 7, thus aiding the slotting of the retaining body into said receptacle 7.

Fig. 11 shows the appearance of a female component 6 for a tag according to the invention, according to the latter variant. Said figure shows the aperture Z for the head 4 (not shown) defined in this case by the clips 100a, 100b and 100c of the retaining body embedded in the body of the identification plate 20. It can be seen in Fig. 11 that aperture Z for the retaining head, which is subsequently passed through by the stem of the male component once said head has been inserted into the receptacle, is larger than aperture Z' defined by the tabs 28 on the female component 6 in Fig. 10, which corresponds to the female component 6 of a conventional tag. The greater width of aperture Z in the female component 6 of the tag according to the invention aids the free rotation of the stem 3 once the male component 2 and the female component 6 are coupled.

Figs. 7 and 8 show a receptacle 7 according to another variant of the invention. The receptacle 7 in Figs. 7 and 8 has an exterior flange 23 that has a slot 21 in one of its faces for housing an electronic identification device 24, as is shown in Fig. 8, whilst its other face has an annular wall 22 concentric with the opening 9 of the receptacle 7, which will serve to support the coiled aerial 25 of the electronic identification device on its outer surface. This annular wall 22 prevents the aerial 25 from becoming deformed and even damaged while the receptacle 7 is being moulded to the identification plate 20, due to the pressure of the plastic melted during the moulding process.

Furthermore, to reduce the weight of the receptacle 7, and therefore the weight of the female component 6 of the tag, the exterior flange 23 has a number of empty spaces or perforations 29, which lighten the weight of the tag as a whole.

## Claims

1. Ear tag (1) for identifying animals, which includes two separate components that are adapted to be irreversibly joined together, consisting of a male component (2) with a stem (3) topped with a head (4) preceded by a peripheral step (5), and female component (6) comprising a receptacle (7), the cavity of which is adapted to house the head of the male component, and a retaining means (13) to secure the head inside the receptacle and therefore to secure the female component, both of which are embedded in an identification plate (20), the receptacle of the female component has an opening (9), a rim (11) of which is solidly joined the retaining means, which comprises at least two retaining clips (10a, 10b; 100a, 100b, 100c) that are **characterised in that** the retaining clips are elastically deformable on a plane of the opening and which transversally cross the rim (11) between them defining an aperture for the head of the male (4) component that can widen when the head of the male (4) component is inserted into the female component (6) due to the bending of the clips (10a, 10b, 100a, 100b, 100c) towards the interior walls of the receptacle (7) and which narrow once said head has been fully inserted, as the clips (10a, 10b; 100a, 100b, 100c) recover their original form, the head (4) remaining irreversibly retained inside the female component (6) as it is limited by the clips (10a, 10b, 100a, 100b, 100c).

2. Tag (1) according to claim 1, **characterised in that**, in the area disposed inside the receptacle (7), the retaining clips (10a, 10b; 100a, 100b, 100c) each comprise central portions (11a, 11b; 111a, 111b, 111c) with a quadrangular cross-section, the middle longitudinal planes of which extend essentially parallel to the direction of insertion of the head (4) of the male component into the female component (6).

3. Tag (1) according to claim 2, **characterised in that** said central portions (11a, 11b; 111a, 111b, 111c) have a rectangular cross-section, their magnitude h in the direction of insertion of the head of the male component into the female component being greater than their magnitude d in the perpendicular direction.

4. Tag (1) according to the previous claims, **characterised in that** there are two retaining clips (10a, 10b), which are parallel and are joined together by at least one of their ends by a connecting portion (12), thereby forming part of an essentially U-shaped retaining body (13).

5. Tag (1) according to claim 4, **characterised in that** the retaining clips (10a, 10b) are inserted into respective notches (14) provided for this purpose in the rim (11) of the opening (9) of the receptacle (7), fitting tightly thereto, and **in that** the clips have respective retaining portions (15a, 15b) on at least one of their ends, which rest against the exterior wall (16) of the receptacle (7), the retaining body (13) being prevented from moving on the plane of the opening (9) in a direction transversal to the clips as they are limited by said notches and in a direction longitudinal to the clips as the retaining portions and/or the connection portions (12; 12') are limited by the exterior wall of the receptacle.

6. Tag (1) according to claims 4 and 5, **characterised in that** the connecting portion (12) between the clips (10a, 10b) has an interior profile that is complementary to that of the exterior wall (16) of the receptacle (7) and **in that** said connecting portion between the clips rests against the exterior wall of said receptacle, said connecting portion acting as a retaining portion, in a direction parallel to the clips (10a and 10b) on the plane of the opening (9).

7. Tag (1) according to claim 5 or 6, **characterised in that** the retaining portions (15a, 15b) are configured by way of a hook.

8. Tag (1) according to claims 4 to 8, **characterised in that** the retaining clips (10a, 10b) each have tabs (18a, 18b) disposed on the clips, which extend outwards transversally, having an exterior profile that is complementary to the interior wall (17) of the receptacle (7), and which fit tightly into said interior wall of the receptacle partially closing off its opening (9).

9. Tag according to claim 8, **characterised in that** the receptacle (7) has an annular interior seat (19) to accommodate the tabs (18a, 18b).

10. Tag according to claims 1 to 3, **characterised in that** there are three retaining clips (100a, 100b, 100c), which between them define an aperture (90) for the head of the male component with a triangular transversal opening.

11. Tag according to claim 10, **characterised in that** the three retaining clips (100a, 100b, 100c) are joined together, the joint between each two clips constituting one of the vertices of the aperture (90) of a retaining body (130).

12. Tag according to claim 11, **characterised in that** the retaining body (130) has transversal extensions (20) that rest on the rim (11) of the opening (9) of the receptacle (7) and a retaining ring (180) fixed onto the retaining clips, which is inserted into the receptacle (7), fitting tightly therein.

13. Tag according to claim 11, **characterised in that** the three retaining clips (100a, 100b, 100c) form a triangular portion (30) of the retaining body (130), which is inserted into the opening (9) of the receptacle (7), fitting tightly therein, and the vertices (31) of said triangular portion are slightly bevelled to correspond with the interior profile of the interior wall (17) of the receptacle (7), against which they rest.

14. Tag according to the previous claims, **characterised in that** the receptacle (7) has an exterior flange (23) that has a slot (21) in one of its faces for housing an electronic identification device (24), whilst its other face has an annular wall (22) concentric with the aperture (90), which will serve to support the coiled aerial (25) of the electronic identification device on its outer surface.

## Patentansprüche

1. Ohrmarke (1) zum Identifizieren von Tieren, welche zwei einzelne Komponenten enthält, die eingerichtet sind, um unlösbar miteinander verbunden zu werden, die aus einer Steckerkomponente (2) mit einem Schaft (3), an dessen Spitze ein Kopf (4) vorgesehen ist, vor dem eine periphere Stufe (5) angeordnet ist, und aus einer Buchsenkomponente (6) besteht, die einen Aufnahmeteil (7), dessen Hohlraum eingerichtet ist, um den Kopf der Steckerkomponente aufzunehmen, und Haltemittel (13) aufweist, um den Kopf innerhalb des Aufnahmeteils zu befestigen und somit die Buchsenkomponente zu befestigen, wobei beide in einer Identifikationsplatte (20) eingebettet sind, wobei der Aufnahmeteil der Buchsenkomponente eine Öffnung (9) aufweist, von der ein Rand mit den Haltemitteln fest verbunden ist, die zumindest zwei Halteklemmen (10a, 10b; 100a, 100b, 100c) enthalten, **dadurch gekennzeichnet, dass** die Halteklemmen auf einer Ebene der Öffnung elastisch verformbar sind und den Rand (11) zwischen ihnen quer kreuzen, wobei eine Öffnung für den Kopf (4) der Steckerkomponente definiert ist, die sich aufgrund der Biegung der Klemmen (10a, 10b; 100a, 100b, 100c) hin zu den Innenwänden des Aufnahmeteils (7) verbreitern kann, wenn der Kopf (4) der Steckerkomponente in die Buchsenkomponente (6) eingesetzt wird, und die sich verengt, sobald der Kopf vollständig eingesetzt ist, da die Klemmen (10a, 10b; 100a, 100b, 100c) wieder ihre ursprüngliche Form annehmen, wobei der Kopf (4) unlösbar in der Buchsenkomponente (6) gehalten bleibt, da er von den Klemmen (10a, 10b; 100a, 100b, 100c) begrenzt wird.

2. Marke (1) nach Anspruch 1, **dadurch gekennzeichnet, dass** die Halteklemmen (10a, 10b; 100a, 100b, 100c) im Bereich innerhalb des Aufnahmeteils (7) jeweils mittlere Abschnitte (11a, 11b; 111a, 111b, 111c) mit viereckigem Querschnitt aufweisen, deren Längsmittelebenen im Wesentlichen parallel zur Einsetzrichtung des Kopfes (4) der Steckerkomponente in die Buchsenkomponente (6) verlaufen.

3. Marke (1) nach Anspruch 2, **dadurch gekennzeichnet, dass** die mittleren Abschnitte (11a, 11b; 111a, 111b, 111c) einen recht-eckigen Querschnitt aufweisen, wobei ihre Größe *h* in Richtung des Einsetzens des Kopfs der Steckerkomponente in die Buchsenkomponente größer als ihre Größe d in der senkrechten Richtung ist.

4. Marke (1) nach den vorhergehenden Ansprüchen, **dadurch gekennzeichnet, dass** zwei Halteklemmen (10a, 10b) vorgesehen sind, die parallel sind und an zumindest einem ihrer Enden durch ein Verbindungsstück (12) miteinander verbunden sind, wodurch sie einen Teil eines im Wesentlichen U-förmigen Haltekörpers (13) bilden.

5. Marke (1) nach Anspruch 4, **dadurch gekennzeichnet, dass** die Halteklemmen (10a, 10b) in jeweilige, zu ihnen eng passende Kerben (14) eingesetzt werden, die zu diesem Zwecke im Rand (11) der Öffnung (9) des Aufnahmeteils (7) vorgesehen sind, und dass die Klemmen an zumindest einem ihrer Enden jeweilige Halteabschnitte (15a, 15b) aufweisen, die an der Außenwand (16) des Aufnahmeteils (7) anliegen, wobei der Haltekörper (13) daran gehindert wird, sich in der Ebene der Öffnung (9) in einer Richtung quer zu den Klemmen zu bewegen, da sie durch die Kerben begrenzt sind, und sich in einer Richtung längs der Klemmen zu bewegen, da die Halteabschnitte und/oder die Verbindungsstücke (12; 12') durch die Außenwand des Aufnahmeteils begrenzt sind.

6. Marke (1) nach Anspruch 4 und 5, **dadurch gekennzeichnet, dass** das Verbindungsstück (12) zwischen den Klemmen (10a, 10b) ein Innenprofil aufweist, das zu jenem der Außenwand (16) des Aufnahmeteils (7) komplementär ist, und dass das Verbindungsstück zwischen den Klemmen an der Außenwand des Aufnahmeteils anliegt, wobei das Verbindungsstück in einer Richtung parallel zu den Klemmen (10a und 10b) in der Ebene der Öffnung (9) als Halteabschnitt wirkt.

7. Marke (1) nach Anspruch 5 oder 6, **dadurch gekennzeichnet, dass** die Halteabschnitte (15a, 15b) in der Form eines Hakens ausgebildet sind.

8. Marke (1) nach den Ansprüchen 4 bis 8, **dadurch gekennzeichnet, dass** die Halteklemmen (10a, 10b) jeweils an den Klemmen angeordnete Lappen (18a, 18b) aufweisen, die sich quer nach außen erstrecken, wobei ihr Außenprofil zur Innenwand (17) des Aufnahmeteils (7) komplementär ist und eng in die Innenwand des Aufnahmeteils passen, wobei sie deren Öffnung (9) teilweise verschließen.

9. Marke nach Anspruch 8, **dadurch gekennzeichnet, dass** der Aufnahmeteil (7) einen ringförmige Innensitz (19) zur Aufnahme der Lappen (18a, 18b) aufweist.

10. Marke nach den Ansprüchen 1 bis 3, **dadurch gekennzeichnet, dass** drei Halteklemmen (100a, 100b, 100c) vorgesehen sind, die zwischen ihnen eine Öffnung (90) für den Kopf der Steckerkomponente mit einer dreieckigen transversalen Öffnung definieren.

11. Marke nach Anspruch 10, **dadurch gekennzeichnet, dass** die drei Halteklemmen (100a, 100b, 100c) miteinander verbunden sind, wobei die Verbindung zwischen jeweils zwei Klemmen einen der Eckpunkte der Öffnung (90) eines Haltekörpers (130) darstellt.

12. Marke nach Anspruch 11, **dadurch gekennzeichnet, dass** der Haltekörper (130) transversale Fortsätze (20), die am Rand (11) der Öffnung (9) des Aufnahmeteils (7) anliegen, und einen Haltering (180) aufweist, der an den Halteklemmen befestigt ist, der eng passend in den Aufnahmeteil (7) eingesetzt wird.

13. Marke nach Anspruch 11, **dadurch gekennzeichnet, dass** die drei Halteklemmen (100a, 100b, 100c) einen dreieckigen Teil (30) des Haltekörpers (130) bilden, der eng passend in die Öffnung (9) des Aufnahmeteils (7) eingesetzt wird, und dass die Eckpunkte (31) des dreieckigen Teils leicht abgeschrägt sind, damit sie dem Innenprofil der Innenwand (17) des Aufnahmeteils (7), an der sie anliegen, entsprechen.

14. Marke nach den vorhergehenden Ansprüchen, **dadurch gekennzeichnet, dass** der Aufnahmeteil (7) einen Außenflansch (23) aufweist, der in einer seiner Flächen einen Schlitz (21) zum Aufnehmen einer elektronischen Identifikationsvorrichtung (24) enthält, während seine andere Fläche eine ringförmige, mit der Öffnung (90) konzentrische Wand (22) aufweist, die dazu dient, die Wendelantenne (25) der elektronischen Identifikationsvorrichtung an ihrer Außenfläche zu halten.

## Revendications

1. Etiquette d'oreille (1) permettant d'identifier des animaux, qui comprend deux composants séparés qui sont adaptés pour être joints l'un à l'autre de manière irréversible, constitués d'un composant mâle (2) avec une tige (3) coiffée d'une tête (4) précédée par un épaulement périphérique (5), et d'un composant femelle (6) comportant un réceptacle (7), dont la cavité est adaptée pour recevoir la tête du composant mâle, et un moyen de retenue (13) permettant de fixer la tête à l'intérieur du réceptacle et dès lors de fixer le composant femelle, dont les deux sont intégrés dans une plaque d'identification (20), le réceptacle du composant femelle présentant une ouverture (9), dont une moulure (11) est solidement attachée au moyen de retenue, qui comprend au moins deux pinces de retenue (10a, 10b; 100a, 100b, 100c), **caractérisée en ce que** les pinces de retenue sont élastiquement déformables sur un plan de l'ouverture et croisent transversalement la moulure (11) en définissant entre elles une ouverture pour la tête (4) du composant mâle, qui peut être élargie lorsque la tête (4) du composant mâle est insérée dans le composant femelle (6) en raison de la flexion des pinces (10a, 10b; 100a, 100b, 100c) vers les parois intérieures du réceptacle (7) et qui se rétrécit une fois que ladite tête a été complètement insérée, lorsque les pinces (10a, 10b; 100a, 100b, 100c) recouvrent leur forme originale, la tête (4) étant retenue de manière irréversible à l'intérieur du composant femelle (6) étant donné qu'elle est limitée par les pinces (10a, 10b; 100a, 100b, 100c).

2. Etiquette (1) selon la revendication 1, **caractérisée en ce que**, dans la zone disposée à l'intérieur du réceptacle (7), les pinces de retenue (10a, 10b; 100a, 100b, 100c) comprennent chacune des portions centrales (11a, 11b; 111a, 111b, 111c) de section transversale quadrangulaire, dont les plans longitudinaux médians s'étendent essentiellement parallèlement à la direction d'insertion de la tête (4) du composant mâle dans le composant femelle (6).

3. Etiquette (1) selon la revendication 2, **caractérisée en ce que** lesdites portions centrales (11a, 11b; 111a, 111b, 111c) ont une section transversale rectangulaire, leur dimension *h* dans la direction d'insertion de la tête du composant mâle dans le composant femelle étant plus grande que leur dimension *d* dans la direction perpendiculaire.

4. Etiquette (1) selon les revendications précédentes, **caractérisée en ce qu'**il se trouve deux pinces de retenue (10a, 10b), qui sont parallèles et sont jointes l'une à l'autre par au moins une de leurs extrémités par une section de jonction (12), faisant ainsi partie d'un corps de retenue (13) essentiellement en forme de U.

5. Etiquette (1) selon la revendication 4, **caractérisée en ce que** les pinces de retenue (10a, 10b) sont insérées dans des encoches respectives (14) prévues à cet effet dans la moulure (11) de l'ouverture (9) du réceptacle (7), en s'ajustant étroitement à celles-ci, et **en ce que** les pinces comportent des portions de retenue respectives (15a, 15b) sur au moins une de leurs extrémités, qui s'appliquent contre la paroi extérieure (16) du réceptacle (7), le corps de retenue (13) étant empêché de se déplacer sur le plan de l'ouverture (9) dans une direction transversale aux pinces étant donné qu'elles sont limitées par lesdites encoches et dans une direction longitudinale aux pinces étant donné que les portions de retenue et/ou les portions de jonction (12; 12') sont limitées par la paroi extérieure du réceptacle.

6. Etiquette (1) selon les revendications 4 et 5, **caractérisée en ce que** la portion de jonction (12) entre les pinces (10a, 10b) présente un profil intérieur qui est complémentaire à celui de la paroi extérieure (16) du réceptacle (7) et **en ce que** ladite portion de jonction entre les pinces s'applique contre la paroi extérieure dudit réceptacle, ladite portion de jonction agissant comme une portion de retenue, dans une direction parallèle aux pinces (10a et 10b) sur le plan de l'ouverture (9).

7. Etiquette (1) selon la revendication 5 ou 6, **caractérisée en ce que** les portions de retenue (15a, 15b) sont configurées en forme de crochet.

8. Etiquette (1) selon les revendications 4 à 8, **caractérisée en ce que** les pinces de retenue (10a, 10b) présentent chacune des ergots (18a, 18b) disposés sur les pinces, qui s'étendent transversalement vers l'extérieur, présentant un profil extérieur qui est complémentaire à la paroi intérieure (17) du réceptacle (7) et qui s'ajustent étroitement dans ladite paroi intérieure du réceptacle en fermant partiellement son ouverture (9).

9. Etiquette selon la revendication 8, **caractérisée en ce que** le réceptacle (7) présente un siège intérieur annulaire (19) destiné à recevoir les ergots (18a, 18b).

10. Etiquette selon les revendications 1 à 3, **caractérisée en ce qu'**il se trouve trois pinces de retenue (100a, 100b, 100c), qui définissent entre elles une ouverture (90) pour la tête du composant mâle avec une ouverture transversale triangulaire.

11. Etiquette selon la revendication 10, **caractérisée en ce que** les trois pinces de retenue (100a, 100b, 100c) sont jointes les unes aux autres, la jonction entre deux pinces constituant chaque fois un des sommets de l'ouverture (90) d'un corps de retenue (130).

12. Etiquette selon la revendication 11, **caractérisée en ce que** le corps de retenue (130) comporte des extensions transversales (20) qui s'appliquent sur la moulure (11) de l'ouverture (9) du réceptacle (7) et une bague de retenue (180) fixée sur les pinces de retenue, qui est insérée dans le réceptacle (7) en s'y ajustant étroitement.

13. Etiquette selon la revendication 11, **caractérisée en ce que** les trois pinces de retenue (100a, 100b, 100c) forment une portion triangulaire (30) du corps de retenue (130), qui est insérée dans l'ouverture (9) du réceptacle (7), en s'y ajustant étroitement, et les sommets (31) de ladite portion triangulaire sont légèrement chanfreinés afin de correspondre au profil intérieur de la paroi intérieure (17) du réceptacle (7), contre laquelle ils s'appliquent.

14. Etiquette selon les revendications précédentes, **caractérisée en ce que** le réceptacle (7) comporte une bride extérieure (23) qui présente une fente (21) dans une de ses faces pour héberger un dispositif d'identification électronique (24), tandis que son autre face comprend une paroi annulaire (22) concentrique à l'ouverture (90), qui servira à supporter l'antenne bobinée (25) du dispositif d'identification électronique sur sa surface extérieure.
